# EUROPÄISCHE PATENTANMELDUNG

(11) **EP 0 874 225 A2**
(43) Veröffentlichungstag der Anmeldung: **28.10.1998**
(21) Anmeldenummer: 98106608.7
(22) Anmeldetag: 09.04.1998
(51) Int. Cl.: G01D 9/00

(54) **Verfahren und System zur Archivierung von Prozesssignalen einer technischen Anlage**

(30) Priorität: 23.04.1997 DE 19717138
(71) Anmelder: SIEMENS AKTIENGESELLSCHAFT, 80333 München (DE)
(72) Erfinder: Bögge, Michael, Dipl.-Ing., 91080 Spardorf (DE); Vielberg, Reinhard, Dipl.-Ing., 91330 Eggolsheim (DE)

(57) **Zusammenfassung**

Um bei zeitfolgerichtig gespeicherten Prozeßsignalen (PS, PSa, PSb, PSr, PSz) eine schnelle Auswertung und Analyse zu ermöglichen, werden bei einem erfindungsgemäßen Verfahren zur Archivierung von Prozeßsignalen (PS, PSa, PSb, PSr, PSz) die als ein Prozeßsignalstrom erfaßten Prozeßsignale (PS, PSa, PSb, PSr, PSz) in einer Anzahl von Zwischenspeichern (12a bis 12n) hinterlegt, wobei jedes Prozeßsignal (PS, PSa, PSb, PSr, PSz) aus einem wählbaren Zwischenspeicher (12a bis 12n) selektiert und anhand des dem Prozeßsignal (PS, PSa, PSb, PSr, PSz) zugrundeliegenden Prozeßsignaltyps in einem diesen charakterisierenden Archivspeicher zeitfolgerichtig hinterlegt wird.

## Beschreibung

Die Erfindung bezieht sich auf ein Verfahren zur Archivierung von Prozeßsignalen einer technischen Anlage, insbesondere einer Kraftwerksanlage, bei dem in einem Zwischenspeicher eine Vielzahl von Prozeßsignalen hinterlegt sind. Sie betrifft weiter ein System zur Archivierung von Prozeßsignalen.

In einer Kraftwerksanlage soll ein Prozeßführungs- und Informationssystem, im weiteren Prozeßsystem genannt, die aktuellen Betriebszustände der Anlage erkennbar machen und Abweichungen von einem von einem Sollzustand melden sowie Diagnosen von möglicherweise auftretenden Fehlern ermöglichen. Dazu ist eine umfangreiche Erfassung und Speicherung von die Betriebszustände aller Anlagenteile charakterisierenden Meßwerten, Meldesignalen, Rechenwerten und Zählwerten erforderlich. Mit zunehmender Energie- und/oder Arbeitsausnutzung derartiger Kraftwerksanlagen und mit zunehmender Steigerung ihres Sicherheitsstandards wachsen auch die Anforderungen an das Prozeßsystem hinsichtlich der Verarbeitung, Speicherung, Analyse und Protokollierung großer Datenmengen.

Zur Speicherung von Prozeßsignalen ist es aus der DE 195 10 539 C1 oder der DE 44 35 457 A1 bekannt, Prozeßsignale gleichen Typs durch Verkettung bzw. durch Zuordnung von Zeigern chronologisch zu archivieren. Aus der etz, Heft 20, 1996, Seiten 24 bis 28, ist es bekannt, verschiedenen Prozeßsignaltypen jeweils zugehörige Prozeßsignale in entsprechende Archivspeicher, z.B. Abbildspeicher oder Ereignisspeicher, chronologisch zu hinterlegen.

Die Speicherung von zeitlichen Prozeßabläufen erfolgt somit üblicherweise durch chronologische Hinterlegung von aus Meßwerten, Meldesignalen, Rechenwerten und/oder Zählwerten abgeleiteten Prozeßsignalen. Die Prozeßsignale sind dabei verschiedenen Prozeßsignaltypen zugeordnet. Insbesondere zu Analyse- oder Diagnosezwecken können aus den gespeicherten Prozeßsignalen Protokolle oder Abbilder des in der Anlage ablaufenden Prozesses erstellt werden, die komplexe Zustände der Anlage zu vorgebbaren Zeitpunkten beschreiben. Da, insbesondere für Kraftwerksanlagen, derartige Diagnosen für jeden beliebigen Tag mindestens innerhalb der letzten zwei Jahre erstellbar sein sollen, müssen große Datenmengen zuverlässig hinterlegt werden. Zu diesem Zweck umfaßt das Prozeßsystem üblicherweise Umlaufpuffer oder Ringspeicher als Zwischenspeicher. Ein Ringspeicher kann dabei eine große Anzahl von Prozeßsignalen enthalten und einen zeitlichen Bereich von mehreren Tagen abdecken.

Bisher wurden die Prozeßsignale ergeignisgesteuert, d.h. bei Änderung des Zustandes oder der Qualität des Prozeßsignales, aus dem Umlaufpuffer ausgelesen und in einem Archivspeicher hinterlegt. Um bei Protokoll- und/oder Analyseanforderungen einen schnellen Zugriff auf die chronologisch archivierten Prozeßsignale zu ermöglichen, werden die einem jeweiligen Prozeßsignal zugrundeliegenden Zeitwerte oder numerischen Werte untereinander über Positionszeiger verkettet.

Bei Überschreiten einer Anzahl von gespeicherten Prozeßsignalen, z.B. 100.000 Werte, wird üblicherweise ein Abbild aller Prozeßsignale in dem gleichen Archivspeicher hinterlegt. Dabei werden auch solche Prozeßsignale archiviert, deren Qualität oder Zustand sich nur selten ändert. Für eine Analyse- oder Protokollanforderung über einen wählbaren Zeitbereich wird der entsprechende Archivspeicher nach den im Auswertezeitraum erfaßten Prozeßsignalen durchsucht, die anschließend ausgegeben werden.

Mit zunehmender Automatisierung und Komplexität der technischen Anlage nimmt die Anzahl der als Prozeßsignale erfaßten Meßwerte, Meldesignale, Rechenwerte und Zählwerte zu. Demzufolge ist das Durchsuchen und Auffinden von relevanten Prozeßsignalen, insbesondere von große Zeitspannen zurückliegenden Prozeßsignalen oder Statusabbildern, für wählbare Protokolle nur unter großem Zeitaufwand möglich. Eine von der Erstellung eines Protokolls oder Statusabbildes abhängige Diagnose oder Analyse kann somit in nachteiliger Weise bis zu einigen Stunden dauern.

Der Erfindung liegt daher die Aufgabe zugrunde, ein Verfahren zur Archivierung von Prozeßsignalen einer technischen Anlage anzugeben, das besonders schnell ist und in besonders einfacher Weise unter Berücksichtigung aller erfaßten Prozeßsignale eine zeitfolgerichtige Auswertung von zu untersuchenden Prozeßsignalen ermöglicht. Weiterhin soll ein zur Durchführung des Verfahrens besonders geeignetes System angegeben werden.

Die erstgenannte Aufgabe wird bei einem Verfahren zur Archivierung von Prozeßsignalen erfindungsgemäß gelöst, indem die als ein Prozeßsignalstrom erfaßten Prozeßsignale in eine Anzahl von Zwischenspeichern hinterlegt werden. Dabei wird jedes Prozeßsignal aus einem wählbaren Zwischenspeicher selektiert und anhand des dem Prozeßsignal zugrundeliegenden Prozeßsignaltyps in einem diesen charakterisierenden Archiv zeitfolgerichtig hinterlegt.

Die Erfindung geht dabei von der Überlegung aus, daß sich die fortlaufende Archivierung aller den Prozeßablauf charakterisierenden Prozeßsignale - der sogenannte Prozeßsignalstrom - zusammensetzt aus Prozeßsignalen verschiedener Prozeßsignaltypen. Dabei umfaßt der Prozeßsignalstrom zu ca. 90 bis 95% Prozeßsignale des Typs 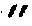 Analogwert" (Meßwerte), zu ca. 1 bis 5% Prozeßsignale des Typs 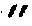 Binärsignale" (Meldesignale) und zu ca. 0 bis 1% Prozeßsignale des Typs 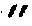 Zähler" (Zählwerte oder Rechenwerte). Da jedoch für eine Protokoll- oder Analyseanforderung nur die einem bestimmten Prozeßsignaltyp zugeordneten Prozeßsignale zu berücksichtigen sind, können alle einem Prozeßsignaltyp zugehörigen Prozeßsignale aus dem Prozeßsignalstrom selektiert werden. Diese wiederum können dann in typspezifischen Speichern hinterlegt werden. Somit wird bei Analysen oder Auswertungen ein Durchlaufen des mit allen Prozeßsignalen aller Prozeßsignaltypen gefüllten Archivspeicher vermieden, so daß eine zeitfolgerichtige Auswertung sowie Darstellung aller zu berücksichtigender oder zu untersuchender Prozeßsignale beschleunigt wird.

Üblicherweise weist jedes Prozeßsignal eine Information über den Zeitpunkt seiner Erfassung, das sogenannte Zeitmerkmal, auf. Damit insbesondere für Störfallanalysen nur diejenigen Prozeßsignale chronologisch ausgegeben werden, die während des Störfalls erfaßt worden sind, wird für das oder jedes Prozeßsignal eine Anfangsposition hinterlegt. Die Anfangsposition stellt dabei die Position des Prozeßsignales innerhalb des Archivspeichers dar. Durch ein derartiges Hinterlegen der Anfangsposition werden die dem Prozeßsignal zugrundeliegenden numerischen Meßdaten (Meßwerte oder Meldesignale, etc.) mit dem entsprechenden Zeitmerkmal besonders schnell ausgelesen und dargestellt.

Bezüglich des Systems wird die gestellt Aufgabe erfindungsgemäß gelöst, indem einer Mehrzahl von Zwischenspeichern eine Anzahl von Teilarchiven nachgeschaltet ist. Dabei umfaßt jedes Teilarchiv einen Abbildspeicher und einen Ablaufspeicher für jeweils einen Prozeßsignaltyp. Außerdem umfaßt das Teilarchiv ein Verwaltungs-File, ein Datenmodell-File und ein Buchhalter-Modul.

Durch die Auftrennung des Prozeßsignalstroms in eine Anzahl von Prozeßsignaltypen sowie durch die Archivierung der dem jeweiligen Prozeßsignaltyp zugehörigen Prozeßsignale in entsprechende Teilarchive wird eine chronologische oder zeitfolgerichtige Auswertung in grafischer Form (Kurvenauswertung) oder in Protokollform (Meldeprotokoll) erzeugt. Durch eine derartige auswerteoptimierte Archivierung wird die Analyse irrelevanter Prozeßsignale vermieden, so daß das Auffinden von zu untersuchenden Prozeßsignalen beschleunigt wird.

Insbesondere für grafische Auswertungen, bei denen zeitlich aufsteigende Meßwerte einer geringen Anzahl von Prozeßsignalen (max. 10 Prozeßsignale) aus einer großen Anzahl von Prozeßsignalen (90-95% aller Prozeßsignale) herausgesucht werden, ist eine signalorientierte Archivierung gewährleistet. Diese besonders zeitsparende und demzufolge effektive Archivierung stellt somit eine den Prozeßsignaltyp sowie das jeweilige Prozeßsignal charakterisierende chronologische Archivierung der zugehörigen Meßwerte dar.

Dagegen ist für Protokollauswertungen, bei denen einige wenige Meldesignale einiger weniger Prozeßsignale (ca. 1-5% aller Prozeßsignale) über einen besonders großen Zeitbereich analysiert werden müssen, eine kontinuierliche zeitlich aufsteigende Archivierung aller dem Prozeßsignaltyp zugehörigen Meldesignale besonders vorteilhaft.

Die mit der Erfindung erzielten Vorteile bestehen insbesondere darin, daß durch eine auswerteoptimierte Archivierung von zu untersuchenden Prozeßsignalen diese für eine Protokoll- oder Analyseanforderung schnellstmöglich ausgebbar und darstellbar sind. Darüber hinaus ist durch die Archivierung und Speicherung der Änderung des Zustandes der Prozeßsignale der Speicherplatz effektiv nutzbar. Insbesondere werden lange Zugriffszeiten zum Auffinden der zu untersuchenden Prozeßsignale vermieden.

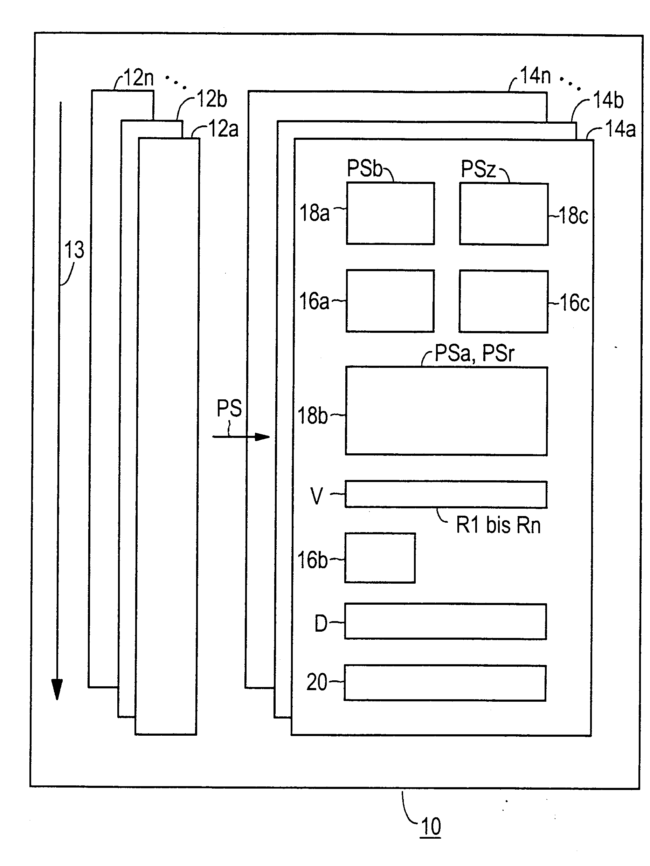

Ein Ausführungsbeispiel der Erfindung wird nachfolgend anhand einer Zeichnung näher erläutert. Darin zeigt die Figur im Ausschnitt ein System mit zur Durchführung eines Verfahrens zur auswerteoptimierten Archivierung von Prozeßsignalen einer technischen Anlage vorgesehenen Komponenten.
Das in der Figur gezeigte Prozeßsystem 10, z.B. ein Prozeßführungs- und/oder Prozeßinformationssystem, umfaßt eine Anzahl von Zwischenspeichern 12a bis 12n sowie eine Anzahl von Teilarchiven 14a bis 14n. Das Prozeßsystem 10 kann ein Personalcomputer oder eine Datenverarbeitungsanlage sein. Der oder jeder Zwischenspeicher 12a bis 12n ist zweckmäßigerweise ein Ringspeicher.

In z.B. einer Kraftwerksanlage erfaßte Meßwerte, Meldesignale, Zählwerte etc. werden in einem (nicht dargestellten) Automatisierungssystem verarbeitet und entsprechenden Prozeßsignalen PS zugeordnet. Dabei weist jedes Prozeßsignal PS eine Information über den Zeitpunkt der Erfassung (das sogenannte Zeitmerkmal) sowie den numerischen Wert des zugrundeliegenden Meßwertes, Meldesignales oder Zählwertes auf. Das Zeitmerkmal erfüllt somit die Funktion einer Zeitmarke innerhalb der chronologischen Reihenfolge der Prozeßsignale PS.

Jedes Prozeßsignal PS ist einem entsprechenden Prozeßsignaltyp zugeordnet. Jeder Prozeßsignaltyp repräsentiert beispielsweise ein Analog- oder Meßwert (z.B. eine Eintrittstemperatur einer Turbine) oder ein binäres Signal (z.B. einen Zustand eines Anlagenteils 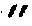 Pumpe EIN") oder einen Zählwert (z.B. Schaltspiel eines Antriebes).

Das Teilarchiv 14a umfaßt darüber hinaus ein Buchhalter-Modul 20, in dem derjenige Zeitbereich verwaltet wird, in welchem die Prozeßsignale PS erfaßt wurden. Das Teilarchiv 14b umfaßt die Prozeßsignale PS, die zu einem späteren Zeitpunkt erfaßt wurden. Darüber hinaus können weitere Informationen, die für die Archivierung sowie für spätere Analysen erforderlich sind, verwaltet werden. Eine derartige Information ist beispielsweise die Anzahl der Abbildspeicher 16a bis 16c, die Anzahl der Ablaufspeicher 18a bis 18c, der Archivstatus oder die Archivierungsart.
Beim Betrieb der Kraftwerksanlage werden die Prozeßsignale PS aller Prozeßsignaltypen mit den jeweils zugehörigen Zeitmerkmalen sowie mit den numerischen Werten in der Reihenfolge ihres Eintreffens (der sogenannte chronologische Prozeßsignalstrom) in dem Zwischenspeicher 12a hinterlegt. Dabei zeigt die Richtung des Pfeiles 13 die chronologische Reihenfolge der erfaßten Prozeßsignale PS an. In Richtung des Pfeiles 13 wird der Zwischenspeicher 12a mit aktuell erfaßten Prozeßsignalen PS gefüllt.

Ist der Zwischenspeicher 12a mit ankommenden Prozeßsignalen PS gefüllt, werden die nachfolgenden Prozeßsignale PS in dem nächsten aktivierten Zwischenspeicher 12b hinterlegt. Wenn alle Zwischenspeicher 12a bis 12n mit Prozeßsignalen PS gefüllt sind, werden die im ersten Zwischenspeicher 12a hinterlegten Prozeßsignale PS durch nachfolgende Prozeßsignale PS überschrieben.

Zur auswerteoptimierten Archivierung werden anschließend zunächst die im Zwischenspeicher 12a hinterlegten Prozeßsignale PS aus diesem anhand des Wertes deren zugrundeliegenden physikalischen Größe (Qualität des Prozeßsignales PS) oder anhand des Prozeßsignaltyps ausgelesen. Danach werden die Prozeßsignale PS in einem entsprechenden Abbildspeicher 16a bis 16c oder in einem Ablaufspeicher 18a bis 18c des Teilarchivs 14a hinterlegt.

In einem Ablaufdatenfile des Ablaufspeichers 18a werden beispielsweise alle dem Prozeßsignaltyp 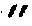 binäre Signale" zugehörigen Prozeßsignale PSb zeitlich aufsteigend hinterlegt. Somit werden alle für einen vorgebbaren Zeitbereich erfaßten Meldesignale verschiedener Prozeßsignale PSb des Prozeßsignaltyps 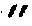 binäre Signale" zeitfolgerichtig archiviert.

Für eine Analyse werden alle Prozeßsignale PSb zyklisch als ein sogenanntes Abbild in dem dem Ablaufspeicher 18a zugehörigen Abbildspeicher 16a hinterlegt. Dabei wird ein komplettes Anfangsabbild der Prozeßsignale PSb zu Beginn des Anlegens des Teilarchivs 14a erzeugt. Anschließend wird, z.B. stundenweise, nur noch ein sogenanntes Differenzabbild zum Anfangsabbild erstellt und in dem Abbildspeicher 16a hinterlegt.

In dem Ablaufspeicher 18b werden - getrennt von den Prozeßsignalen PSb - alle dem Prozeßsignaltyp 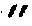 Analogwert" zugehörigen Prozeßsignale PSa zeitlich aufsteigend in einem Analogwertfile hinterlegt. Dabei werden im Unterschied zu den Meldesignalen der Prozeßsignale PSb jeweils alle für einen vorgebbaren Zeitbereich erfaßten Meßwerte des zugeordneten Prozeßsignales PSa zeitfolgerichtig in dem Analogwertfile archiviert. In gleicher Art werden jeweils die Meßwerte der anderen Prozeßsignale PSa zusammengefaßt und in dem Analogwertfile an einer nachfolgenden Position archiviert.

Um insbesondere bei Analysen einzelner Prozeßsignale PSa des Prozeßsignaltyps 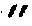 Analogwert" diese schnell auffinden zu können, wird in einem Verwaltungsfile V jeweils die Anfangsposition P1 bis Pn des Prozeßsignales Psa, d.h. die Position oder der Speicherplatz im Analogwertfile, hinterlegt.

Darüber hinaus werden zu den Prozeßsignalen PSa die Prozeßsignale PSr des Prozeßsignaltyps 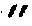 Rechenwert" in gleicher Art und Weise in einem Rechenwertfile des Ablaufspeichers 18b hinterlegt. Die jeweilige Anfangsposition R1 bis Rn des Prozeßsignales PSr wird ebenfalls in dem Verwaltungsfile V hinterlegt.

Analog zu dem Abbildspeicher 16a der Prozeßsignale PSb wird in dem zugehörigen Abbildspeicher 16b der Prozeßsignale PSa und der Prozeßsignale PSr ein komplettes Abbild (ein Anfangsabbild sowie Differenzabbilder) aller Prozeßsignale PSa und aller Prozeßsignale PSr des Prozeßsignaltyps 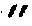 Analogwert" bzw. 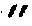 Rechenwert" archiviert.

Die Prozeßsignale PSz des Prozeßsignaltyps 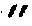 Zählwert" werden in einem Zählwertfile des dem Prozeßsignaltyp zugehörigen Ablaufspeichers 18c zeitlich aufsteigend hinterlegt. Dabei werden jeweils die jedem Prozeßsignal PSz zugrundeliegenden Zählwerte einmal pro Stunde als ein Block in dem Zählwertfile archiviert. Die in dem Block erfaßten Prozeßsignale PSz repräsentieren dabei jeweils das gesamte Abbild aller Zählwerte. In dem zugehörigen Abbildspeicher 16c wird die Anfangsposition des jeweiligen Blocks, d.h. seine Position im Zählwertfile, hinterlegt.

Die Prozeßsignale PSb, PSa, PSr und PSz umfassen einerseits eine dynamische Komponente - mit dem dieser zugrundeliegenden Meldesignale, Meßwerte, Rechenwerte bzw. Zählwerte - und andererseits eine statische Komponente, das sogenannte Datenmodell. Das Datenmodell umfaßt dabei die Beschreibungsdaten des jeweiligen Prozeßsignales PSb, PSa, PSr und PSz, z.B. Prozeßkennzeichen, Begleittexte, Meßbereiche, den Erfassungszyklus und/oder Verarbeitungsvorschriften. Das in einem Datenmodell-File D des Teilarchivs 14a hinterlegte Datenmodell des jeweils zugehörigen Prozeßsignales PSb, PSa, PSr und PSz wird beispielsweise bei Protokollauswertungen mit den Prozeßsignalen PSb, PSa, PSr und PSz zu sogenannten Protokollzeilen verknüpft, die anschließend ausgegeben werden.

Ein jedes Teilarchiv 14a bis 14n umfaßt somit die jeweils einem Prozeßsignaltyp zugehörigen Ablaufspeicher 18a bis 18c und Abbildspeicher 16a bis 16c sowie das Verwaltungs-File V und das Datenmodell-File D. Dabei kann der Aufbau der Teilarchive 14a bis 14n variieren. Beispielsweise kann der Abbildspeicher 16a bis 16c entfallen. Die Teilarchive 14a bis 14c werden z.B. auf einer Harddisk, einer CD-ROM, einer MOD oder einer Juke-Box archiviert.

Für ein Ablaufprotokoll wird nur noch das entsprechende Ablaufdatenfile des Ablaufspeichers 18a nach den zu berücksichtigenden Prozeßsignalen PSb durchsucht. Anschließend werden diese Prozeßsignale PSb auf einem Bildschirm oder einem Drucker ausgegeben. Für eine Kurvenauswertung wird nur noch das entsprechende Analogwertfile des Ablaufspeichers 18b nach den zu berücksichtigenden Prozeßsignalen PSa durchsucht. Analog dazu wird für ein Zählwertprotokoll das entsprechende Zählwertfile des Ablaufspeichers 18c nach den zu untersuchenden Prozeßsignalen PSz durchsucht. Nach Auffinden der Prozeßsignale PSa oder der Prozeßsignale PSz werden diese auf einem Bildschirm oder Drucker ausgegeben.

Demzufolge wird das Auffinden der relevanten Prozeßsignale PSb, Psa, PSz oder einzelner Prozeßsignale PSb, PSa, PSz vereinfacht und beschleunigt. Durch die oben beschriebene auswerteoptimierte Archivierung sind beispielsweise Auswertungen in Abhängigkeit von der Größe dem zu untersuchenden Zeitbereiches gegenüber einem sequentiellen Lesen eines Speichers um das 50 bis 500fache beschleunigt, da das sequentielles Lesen des gesamten Inhaltes eines Ringspeichers nicht mehr erforderlich ist. Darüber hinaus wird der Speicherplatzbedarf reduziert.

## Patentansprüche

1. Verfahren zur Archivierung von Prozeßsignalen (PS, PSa, PSb, PSr, PSz) einer technischen Anlage, bei dem die als ein Prozeßsignalstrom erfaßten Prozeßsignale (PS, PSa, PSb, PSr, PSz) in einer Anzahl von Zwischenspeichern (12a bis 12n) hinterlegt werden, wobei jedes Prozeßsignal (PS, PSa, PSb, PSr, PSz) aus einem wählbaren Zwischenspeicher (12a bis 12n) selektiert und anhand des dem Prozeßsignal (PS, PSa, PSb, PSr, PSz) zugrundeliegenden Prozeßsignaltyps in einem diesen charakterisierenden Archivspeicher zeitfolgerichtig hinterlegt wird.

2. Verfahren nach Anspruch 1,
bei dem für das oder jedes Prozeßsignal (PSa, PSr, PSz) die Anfangsposition innerhalb des Archivspeichers hinterlegt wird.

3. System zur Archivierung von Prozeßsignalen (PS, PSa, PSb, PSr, PSz) einer technischen Anlage, bei dem mindestens einem Zwischenspeicher (12a bis 12n) eine Anzahl von Teilarchiven (14a bis 14n) nachgeschaltet ist, wobei jedes Teilarchiv (14a bis 14n) einen Abbildspeicher (16a bis 16c) und einen Ablaufspeicher (18a bis 18c) für jeweils einen Prozeßsignaltyp, ein Verwaltungs-File (V), ein Datenmodell-File (D) und ein Buchhalter-Modul (20) umfaßt.
